Europäisches Patentamt

**European Patent Office**

Office européen des brevets

(11) Publication number: **0 567 836 A2**

## EUROPEAN PATENT APPLICATION

(21) Application number: **93105945.5**

(22) Date of filing: **13.04.93**

(51) Int. Cl.5: **G06K 9/62**

(30) Priority: **29.04.92 US 875516**

(43) Date of publication of application:
**03.11.93 Bulletin 93/44**

(84) Designated Contracting States:
**DE FR GB**

(71) Applicant: **INTERNATIONAL BUSINESS MACHINES CORPORATION**
**Old Orchard Road**
**Armonk, N.Y. 10504(US)**

(72) Inventor: **Joonki, Kim**
**6 Macy Avenue**
**White Plains, N.Y. 10605(US)**

(74) Representative: **Mönig, Anton, Dipl.-Ing.**
**IBM Deutschland Informationssysteme GmbH,**
**Patentwesen und Urheberrecht**
**D-70548 Stuttgart (DE)**

(54) Writer style detection and automatic prototype creation for on-line handwriting recognition.

(57) A handwriting recognition system is set forth for creating a user prototype set. Writings of an alphabet set are collected from a plurality of writers. The collected writings are classified into subsets of the alphabet set based on different writing styles. There are created j, where j is an integer greater than or equal to 2, prototype style sets for each of the subsets of the alphabet set. A default set of characters is created for characters that do not belong to any of the subsets. Less than a complete alphabet set of writings from a user is sampled. Each character of the sampled writings of the user are compared with the j prototype style sets to determine which user written characters match one or more of the j prototype style sets. The user written characters and the matched prototype style sets and the default set are then merged to form a user prototype set for the user.

FIG.1

## FIELD OF THE INVENTION

The invention is in the field of handwriting recognition, and specifically is directed to automatically detecting the writing style of a user, and creating a user prototype set by selecting from the user writings and prestored subsets of an alphabet, termed style sets, and a default set.

## BACKGROUND OF THE INVENTION

Establishment of prototypes for on-line handwriting recognition is a time consuming process. It takes time to collect all variations even for one writer. Different writers have conflicting styles, and no pre-prepared prototype set can serve every writer.

On-line handwriting recognition systems usually keep a set of writings with proper labels, and checks if a new unknown writing is similar to any of the prestored writings. The label of the prestored writing that best matches the unknown becomes the recognition result.

Quality of recognition depends on the match process and prestored writings. Prestored writings are called prototypes.

The most obvious way of creating a prototype set is to collect writings from the user, and make them into prototypes. For example, prescribed sentences are presented to the user, and users are asked to copy the sentences in fixed positions. Then the computer associates the alphabets of the sentences to the user's writings and the user prototype set is created.

One problem of the straightforward training is the time it takes for the user. A new user generally is not able to use the system prior to training. Short training sessions are not enough to collect all variations and accuracy suffers.

By providing a prototype set that contains common writing styles, a new user can use the system from the beginning. But in real life, there is no writing style common to everyone. One user's "t" may be another user's " + ", and right and left-handed writers have rather distinct writing styles. A starter prototype set works well for some, but not well for others.

There is literature directed to forming prototypes. IBM TDB Vol. 24, No. 11A, April 1982 is an article entitled "Cursive Script Recognition System By Elastic Matching" by C. C. Tappert. IBM TDB Vol. 24, No. 6, Nov. 1981 is an article entitled "Symbol Recognition System By Elastic Matching" by J. M. Kurtzberg et al. Each of these articles is directed to recognition systems in which prototypes are merely collected from a user.

A similar prototype collection scheme as in the above TDBs is found in an article entitled "Feature Analysis For Symbol Recognition By Elastic Matching" in the IBM Journal of Research and Development, Vol. 31, No. 1, pages 91-95 by J. M. Kurtzberg.

According to the present invention, rather than collecting a complete prototype set from a user, which is very time consuming, a user writes just a few letters, rather than a complete alphabet set. Previously collected writings of others are classified into subsets of the alphabet based on different writing styles, and a default set of characters is also created. The user written characters, and one or more style sets which match the writing style of the user, and the default set are merged to form a user prototype set.

## DISCLOSURE OF THE INVENTION

In a handwriting recognition system, method and apparatus is set forth for creating a user prototype set. Writings of an alphabet set are collected from a plurality of writers. The collected writings are classified into subsets of the alphabet set based on different writing styles. There are created j, where j is an integer greater than or equal to 2, prototype style sets for each of the subsets of the alphabet set. A default set of characters is created for characters that do not belong to any of the subsets. Less than a complete alphabet set of writings from a user is sampled. Each character of the sampled writings of the user are compared with the j prototype style sets to determine which user written characters match one or more of the j prototype style sets. The user written characters and the matched prototype style sets and the default set and the created user style set are then merged to form a user prototype set for the user.

## BRIEF DESCRIPTION OF THE DRAWINGS

FIG. 1 is a simplified block diagram of a handwriting recognition system constructed and operated in accordance with the invention; and
FIG. 2 is a block diagram detailing the prototype processor of FIG. 1;

FIG. 3 is a flow chart of how a user prototype set is created in the prototype processor of FIGS. 1 and 2.

## BEST MODE OF CARRYING OUT THE INVENTION

This invention is directed to creating a user prototype set for a handwriting recognition system, where the user prototype set is created in as short a time as possible.

Although each writer has a distinct writing style and there are a large number of styles, if the alphabet set is divided into subsets, there are rather few distinct styles for each subset. For example, the characters "D" and "P" are commonly written in one or two strokes. The writer that writes "D" in one stroke usually writes "P" in one stroke. This results in two different style sets for D and P. Left-handed writers often write short horizontal strokes right to left, and right-handed writers write left to right, making two classes or style sets of characters such as "T", "F", "H".

The first step is to collect writings from many writers. Then that large writing set is analyzed and classified into subsets such as (D,P), (T,F,H). Style sets for each of such subsets are created such that there will be a style set with one stroke (D,P), a style set for two strokes (D,P), a style set for left to right (T,F,H) and a style set for right to left (T,F,H). In the example case, there will be a total of 4 prototype style sets. The user writings character by character are matched with each style. If any character of a style set is a good match, then the writer has this type of style of writing. For example, if the one stroke "D" was found in the user writing, then the user has a one stroke (D,P) style.

There are characters that do not belong to any style sets, (such as "o" "O", "c", "C", "s", "S", and most punctuation marks) and a separate set (default set) is necessary for the alphabet.

There are two kinds of user writings. One that matches a prototype style set, and one that does not match any prototype style set. To create a user prototype, merge the user writing with all prototype style sets that matched user writing and the default style set.

A good collection of prototype style sets is the key to high accuracy. But even a moderate collection of style sets shortens the training time greatly. In the ideal case, a very short training sequence, that does not necessarily contain every character of the alphabet, can be sufficient to create a user prototype set.

Integration of the automatic writing style into a handheld tablet-pen based computer will greatly reduce the training time, which results in high recognition accuracy quickly, making the computer more usable.

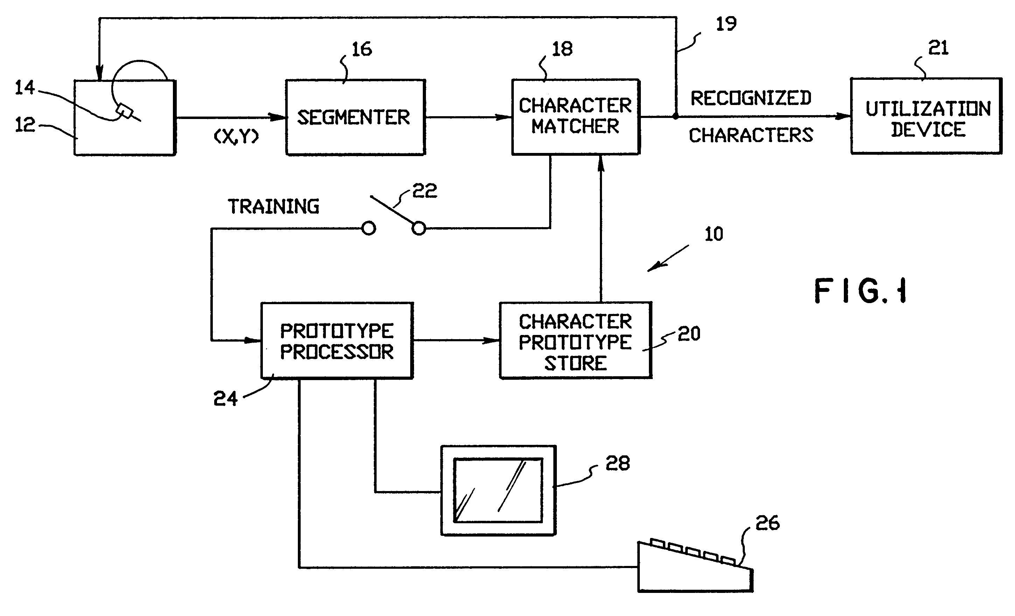

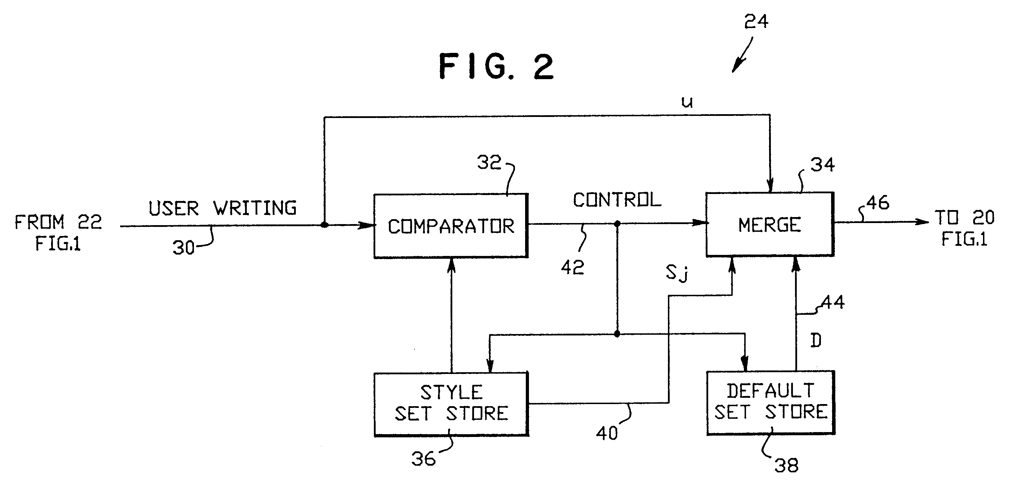

Referring to Fig. 1 there is shown in general an on-line handwriting character recognition system 10 constructed and operated in accordance with the invention. The system may be implemented utilizing any general purpose computer. For example, the system may be implemented using an IBM PS/2 Model 80 running OS/2. IBM and PS/2 and OS/2 are each registered trademarks of the International Business Machines Company. System 10 includes a handwriting transducer comprised of an integrated electronic tablet and display 12 having a writing implement, such as a stylus 14. In response to handwritten characters the transducer outputs a serial stream of (x,y) coordinate pairs corresponding to a position of the stylus 14 relative to the tablet 12 coordinate system. The coordinate pairs are provided to a stroke segmenter 16 that identifies a beginning and an end of discrete handwritten strokes. Strokes are provided to a character matcher 18. Character matcher 18 is coupled to a store 20 of predetermined character prototypes for comparing points of input strokes to points of stored character prototypes so as to identify, to within some probability, that an input stroke or assemblage of strokes represents a specific character. Recognized characters are output from the matcher 18 via line 19 to tablet and display 12 to display the recognized characters, or may be applied to a utilization device 21 such as a display, an application, such as a word processing program, or the like. In some systems the functionality of the segmenter 16 and the character matcher 18 may be combined within one handwritten stroke processing unit.

Character prototypes may be provided to the store 20 during a training session held with a user of the system 10. The character prototypes may be entered by a specific user of the system and thereafter used only when the specific user enters handwritten characters. Also, a global or universal set of character prototypes may be generated for use with more than one user.

In this regard a starter prototype set may be designed as an initial prototype set to be used by any writer on first using the system 10. If desired, a writer may then add character prototypes in his/her own writing style to obtain a prototype set tailored to the writer, also referred to as an individualized prototype set. In that a starter prototype set is typically created by an expert in handwriting recognition systems, there is no burden placed on a user of the system 10 to follow any writing suggestions or constraints. The details of how a starter prototype set is generated according to this invention is described shortly.

In general, during a training session characters from character matcher 18 are routed through a physical or logical switch 22 to a prototype processor 24, which for example may be an Intel '386 processor. The output of prototype processor 24 is a series of averaged prototype characters that are supplied to store 20 for subsequent use during a handwriting recognition session conducted with a user of the system 10.

Prototype processor 24 may also be coupled to a user input and output device, such as a keyboard 26 and a display device 28 for controlling the operation of prototype processor 24 in the deletion of confusing prototypes as used during a handwriting recognition session conducted with a user of the system 10. It is to be understood that Keyboard 26 and display 28 are optional, as the system is functional with only pen input.

It is to be appreciated that the integrated electronic tablet and display 12 could be replaced by an electronic tablet not having a display, with display of characters being provided on the utilization device 21 or display 28.

Refer now to FIG. 2 which is a detailed functional block diagram of the prototype processor 24 of FIG. 1 for creating a user prototype set. A user provides user writings on a line 30 to a comparator 32 and a merge unit 34. The user writings (u), as previously stated, is less than a completed alphabet set. Let the user writing u be defined as:

u = {B,T ....}

The writings of an alphabet set are collected from a plurality of writers. These collected writings are classified into subsets of the alphabet based on different writing styles. These are created j, where j is an integer greater than or equal to 2, style sets (Sj) for each of the subsets of the alphabet based on different writing styles. There will be many such style sets. Let the style sets Sj be defined as:

```
Style set 1, S1 = { B,D,P } (one stroke letters)


Style set 2, S2 = { B,D,P } (two stroke letters)


Style set 3, S3 = { A,E,F } (left to right)


Style set 4, S4 = { A,E,F } (right to left)


        •           •        •

        •           •        •

        •           •        •


Style set j, Sj = { T,I ... }
```

The j style sets Sj are stored in a style set store 36.

A default set of characters D is created for characters that do not belong to any of the style sets Sj. As previously stated, the default set D may include, for example, "o", "O", "c", "C", "s", "S" and most punctuation marks. Let the default set D be defined as:

D = { O, C, S ... }

The default set D is stored in a default store set 38.

The creation of a user prototype is as follows. Assume the user writing is as follows:

u = A C D.

The user writing u on line 30 is provided to comparator 32 and merge unit 34. The letter A, a left to right, is found to compare with style set 3 (S3) and S3 is provided to merge unit 34 on line 40 under control of a control signal on line 42. The letter C is found not to compare with any style set in store 36, and the default set D is provided on line 44 to the merge unit 34 under control of the control signal on line 42. It is to be understood that the default set D is always provided to merge unit 34. This occurs even if a default character isn't written by the user. The letter D, a one stroke letter, is found to compare with style set 1 (S1), and S1 is provided to merge unit 34 on line 40 under control of the control signal on line 42. It is to be appreciated that the process occurs for each letter of the less then complete alphabet written by the user. For this particular writing, the user prototype Pu which is provided on line 46 at the output of merge unit 34

4

EP 0 567 836 A2

to the prototype store 20 (FIG. 1) is:

Pu = u + S1 + S3 + D

That is, the user prototype is the user writing (u) and style set 1 (S1) and style set 3 (S3) and the default set (D).

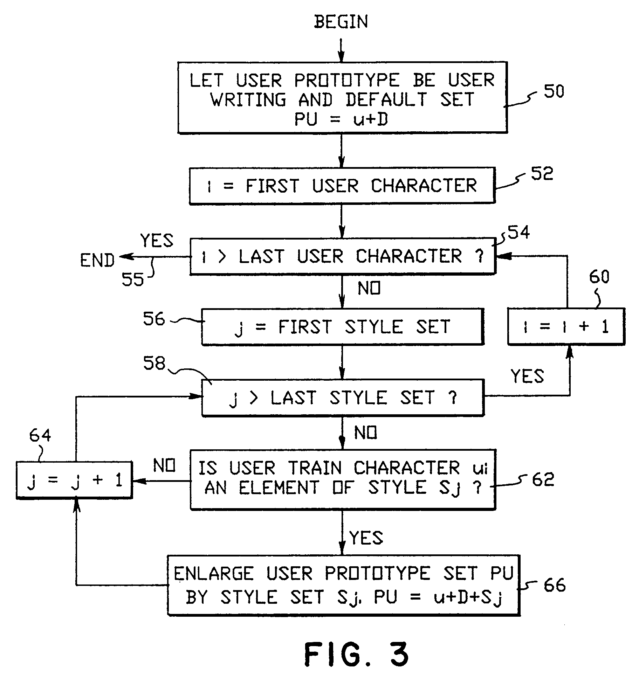

Refer now to FIG. 3 which is a detailed flow chart of how a user prototype Pu is created. At block 50, the user prototype Pu is initially set equal to the user writings u and the default set D. The user writing is comprised of i, where i is an integer $\geq$ 1, characters. In block 52, i is set equal to the first character. In this first instance i = 1. In block 54, a determination is made if i is greater than the number of characters written by the user. For example, if the user writes 10 characters, the determination is made if i > 10. If so, the procedure ends as indicated at 55. If not, proceed to block 56 where j is set equal to the first style set, in this instance S1. Next proceed to block 58 where a determination is made if J is greater than the last style set. For example, if there are six style sets, a determination is made if J is greater than six. If so, this is indicative that all style sets have been compared with this particular character. Proceed then to block 60 where i is incremented by 1, so the next user written character may be examined. At block 54 through block 58, this procedure is repeated for this and each following user written character.

If at block 58, the determination is made if the user written character ui is an element of the style set Sj to which it is presently being compared. If not, proceed to block 64 where j is incremented by 1 so the next style set may be compared with the written character Ui, as just explained relative to blocks 58 and 62.

If at block 62 a determination is made that character Ui is an element of style set Sj, proceed to block 66 where the user prototype set Pu is enlarged by style set Sj. That is:

Pu = u + D + Sj.

Proceed to block 64 to increment j by 1, so any following style set may be compared to the user writing u as previously explained. It is seen that each successive character written by the user is compared with each style set. Whenever a character compares to a given style set, that style set is added to the user's writings and the default set to form a user prototype for the the user.

INDUSTRIAL APPLICABILITY

It is an object of the invention to provide an improved user prototype construction technique in a handwriting recognition system.

It is another object of the invention to provide a faster user prototype construction technique in a handwriting recognition system.

It is yet another object of the invention to provide a faster user prototype construction technique in a handwriting recognition system by collecting writings of less than a complete alphabet set from a user which is compared with each style set from a library of writing style sets to find style sets which match with the user writings. The user writings and the matched style sets and a default set are merged to form a user prototype set for the user.

**Claims**

1. A method of creating a user prototype set in a handwriting recognition system, said method comprising the steps of:

   classifying collected writings of an alphabet set from a plurality of writers into subsets of said alphabet set, based on the different writing styles of said plurality of writers;

   creating j, where j is an integer $\geq$ 2, writing style sets for each of the subsets of said alphabet set;

   sampling less than a complete alphabet set of user writings from a user;

   comparing the user writings with each of the writing style sets to determine which user written characters match one or more of said j writing style sets; and

   merging the user writings and the matched writing style sets to form a user prototype set for the user.

2. The method of claim 1, including the step of:

   creating a default set; and

   merging the user writings and the matched style sets and the default set to form a user prototype for the user.

3. In a handwriting recognition system, a method of creating a user prototype set, said method of comprising the steps of:

   collecting writings of an alphabet set from a plurality of writers, at least some of which have different

5

writing styles;

classifying the collected writings into subsets of characters of said alphabet, based on the different writing styles of said plurality of writers;

creating j, where j is an integer $\geq 2$, writing style sets Sj for each of the subsets of characters of said alphabet set;

creating a default set of characters D in said alphabet set;

sampling less than the complete alphabet set of user writings u from a user;

comparing the user writings with each of the writing style sets Sj to determine which of the user written characters match one or more of the writing style sets Sj with such matched style sets being defined as MSj; and

creating a user prototype set Pu, where Pu = u + D + MSj.

4. The method of claim 2 or 3, wherein the style sets Sj are based on at least the number of strokes making up a given character.

5. The method of claim 2, 3 or 4, wherein the style sets Sj are based on at least whether a stroke of a character is made left to right or right to left.

6. The method according to any one of the preceding claims, wherein the style sets Sj are based on at least the number of strokes making up a given character and whether or not a stroke is from left to right or right to left.

7. The method according to any one of the preceding claims, wherein said default set includes at least punctuation marks.

FIG.1

EP 0 567 836 A2

# FIG. 2

BEGIN

LET USER PROTOTYPE BE USER
WRITING AND DEFAULT SET
PU = u+D        — 50

i = FIRST USER CHARACTER        — 52

YES
END ◄──── i > LAST USER CHARACTER ?  — 54

55

NO

56 — j = FIRST STYLE SET

i = i + 1        — 60

58 — j > LAST STYLE SET ?        YES

NO

64
j = j + 1   ◄── NO   IS USER TRAIN CHARACTER ui
AN ELEMENT OF STYLE Sj ?        — 62

YES

ENLARGE USER PROTOTYPE SET PU
BY STYLE SET Sj, PU = u+D+Sj        — 66

# FIG. 3

9